# EUROPEAN PATENT APPLICATION

(11) **EP 4 249 427 A1**
(43) Date of publication of application: **27.09.2023**
(21) Application number: 22164486.7
(22) Date of filing: 25.03.2022
(51) Int. Cl.: C01B 3/02, C25B 1/04, G06Q 50/06

(54) **METHOD AND SYSTEM FOR RESILIENT HYDROGEN PRODUCTION**

(71) Applicant: CibusCell Technology GmbH, 67346 Speyer (DE)
(72) Inventor: RÜBSAM, Marcus, 68163 Mannheim (DE); SCHWARZ, David, 52064 Aachen (DE); SCHWARZ, Armin, 69251 Gaiberg (DE)
(74) Representative: Hofmann, Matthias

(57) **Abstract**

The present invention provides a method for supporting resilient hydrogen production from one or more renewable energy sources, the method comprising:
- obtaining, at a plurality of time points, measurements from environmental sensors that indicate a current environmental condition of the renewable energy sources,
- predicting, using a machine learning model, a future power output of the renewable energy sources based on the measurements, and
- adjusting, based on the machine learning model, one or more hydrogen production parameters based on the predicted future power output.

## Description

### TECHNICAL FIELD

The present invention relates to a method and a system for supporting resilient hydrogen production from one or more renewable energy. The present invention also relates to a computer-readable storage medium storing program code, the program code comprising instructions for carrying out such a method.

### BACKGROUND

Green hydrogen is an attractive alternative to fossil fuels. While the world's oil reserves are rapidly depleted and the reduction of CO2 emissions is a worldwide common goal, the supply of hydrogen remains virtually unlimited. Green hydrogen can be produced from a renewable source such as solar or wind by the electrolysis of water. Green Hydrogen has a high density of energy by unit weight and is essentially non-polluting since the main product from burning hydrogen is water. Green hydrogen is preferably produced from electrolysis powered by renewable electricity.

While hydrogen has wide potential application as energy, a major drawback in its utilization, especially in the industry such as the powering of factories, has been the lack of a resilient production and the associated early detection of disorders. Identifying and building a sustainable hydrogen energy system without data and software is a challenge. Transitioning to a circular economy (solar and wind) represents a systematic shift as these are natural resources and not predictable by nature - a continuous data and software driven process is needed to plan, monitor and control the green production process to become more resilient and reliable. As usually renewable energy sources are very distributed there are challenges between different organizations working together around integration of nascent technologies into the hydrogen energy system. The so-called resilient intermittency challenge - the constant matching of supply and demand for renewable energy sources is also a major challenge and requires resilient data analytics in a timely manner and yet accurate as possible across the production process.

Overall, there is a need for resilient hydrogen production that makes a reliable contribution to a modern environmentally-friendly energy economy.

### SUMMARY OF THE INVENTION

An objective of the present invention includes to provide a method and a system for supporting resilient hydrogen production from one or more renewable energy sources, which overcome one or more of the above-mentioned problems of the prior art.

A first aspect of the invention provides a method for supporting resilient hydrogen production from one or more renewable energy sources, the method comprising:
- obtaining, at a plurality of time points, measurements from environmental sensors that indicate a current environmental condition of the renewable energy sources,
- predicting, using a machine learning model, a future power output of the renewable energy sources based on the measurements, and
- adjusting, based on the machine learning model, one or more hydrogen production parameters based on the predicted future power output

The method of the first aspect has the advantage that the machine learning model predicts a future power output of the renewable energy sources and based on this prediction hydrogen production parameters are adjusted appropriately. The training can be performed such that a target objective, for example a maximization of hydrogen production and/or a maximization of total power output, is optimized. The machine learning model can be used only for predicting the future power output or for generating an output that is directly used for adjusting the one or more hydrogen production parameters.

The one or more hydrogen production parameters can include for example a hydrogen production rate of an electrolysis unit. Thus, based on the predictions of the machine learning model, it can be decided whether available electricity from the renewable energy sources is used for hydrogen production or for directly feeding the produced electricity into the power grid. The machine learning model can be provided with a fill level of a hydrogen tank as input and/or the predictions of the machine learning model can include a future fill level of the hydrogen tank.

In a first implementation of the method according to the first aspect, environmental data and/or IoT measurements serve as a database for training the machine learning model. The environmental data can include weather forecasts, including in particular forecasts of sunshine hours, rain and/or wind. Furthermore, direct measurements related to environmental conditions and/or power from renewable energy sources can be provided in real time and from distributed sources to the machine learning model. Thus the method can in short time, if necessary within seconds, react to changing conditions and optimize hydrogen production parameters.

In a further implementation of the method of the first aspect, the machine learning model comprises a reinforcement learning, RL, agent that is configured to adjust the one or more hydrogen production parameters with a framework of production-relevant relationships.

It is an important realisation of the present implementation that the hydrogen production system is a system with a dynamic time-dependent state. The best decision for a choice of the one or more hydrogen production parameters depends not only on the current environmental conditions, but also on previous actions, leading e.g. to a high or low current fill level of a hydrogen tank. The framework of reinforcement learning allows the RL agent to learn from experience. For example, the RL agent can learn that at times of sunny weather not only the available energy from the renewable energy sources may be higher, but also certain consumers may show higher or lower energy consumption in correlation with the increased sunshine hours and/or daytime. Furthermore, the actions of the RL agent, for example an increasing of the fill level of one or more hydrogen tanks, may lead to responses. This allows the filled hydrogen tank to be used profitably at a time of higher energy demand. Thus, the RL agent can learn how to optimise hydrogen production parameters.

In a further implementation of the method of the first aspect, the RL agent is configured to control one or more of a hydrogen production plan, a feed-in of the produced hydrogen, one or more parameters of storage or transport of the hydrogen, and a coupling with a by-product of the hydrogen production, in particular produced waste heat.

Controlling these parameters has the advantage that an optimised control of the hydrogen production is achieved and the hydrogen production is resilient against adverse environmental conditions. For example, the machine learning model can learn to provide a high fill level of the one or more hydrogen tanks if a weather forecast predicts cloudy and windless conditions that lead to low power output of the renewable energy sources at a later point in time.

In a further implementation of the method of the first aspect, the machine learning model is configured to increase the resilience of hydrogen production by optimizing a measure of overall hydrogen production. For example, the RL agent may be trained with a reward that corresponds to a monthly hydrogen production amount. Thus, the RL agent controlling the one or more hydrogen production parameters is trained to optimise not only the immediate output, but the hydrogen production over a longer time span.

In a further implementation of the method of the first aspect, the method further comprises detecting a trend and/or an anomaly in time series of IoT measurements and environmental data. If the time series of IoT measurements and environmental data comprises an anomaly, it may be preferential to be prepared for disruptions. Thus, a cautious approach may be preferred. This may include for example aiming for a higher fill level of the one or more hydrogen tanks to mitigate any subsequent decline in renewable energy sources.

In a further implementation, the method further comprises generating an alert when the trend and/or a value of the anomaly exceeds a predefined threshold. For example, the method can generate an alert when the trend is a decreasing trend of a fill level of a hydrogen tank and/or a hydrogen production rate. The value of the anomaly can be a value that characterizes an importance of the anomaly. For example, the anomaly can be a difference from historic values and the value characterizing the anomaly can be a number of standard deviations that a current fluctuation deviates from previous deviations.

Preferably, an output alert is automatically passed to a collaboration systems that enables internet-based communication and distribution of roles and tasks. This allows users, e.g. operators of a hydrogen production plant, to quickly react to the negative trend and/or the anomaly.

In a further implementation of the method of the first aspect, the renewable energy sources comprise one or more of hydropower, wind turbines, solar cells, bioenergy and geothermal energy, and the environmental sensors comprise an anemometer, a light sensor and/or a power meter that measures a current output power of the renewable energy sources. These combinations of renewable energy sources and environmental sensors have been proven particularly useful.

In a further implementation of the method of the first aspect, the method further comprises a step of normalizing the measurements and storing the normalized measurements in a cloud-based data storage. This has the advantage that measurements from different plants can be compared and uniformly evaluated.

In a further implementation of the method of the first aspect, two-way, real-time communication between the IoT and environmental sensors and the cloud server is maintained permanently using wireless or comparable communication channels.

A second aspect of the present invention relates to a system for supporting resilient hydrogen production from one or more renewable energy sources, the system comprising:
- a receiving unit configured to receive measurements from one or more environmental sensors, the measurements indicating a current environmental condition of the renewable energy sources,
- a prediction unit that is configured to, using a machine learning model, predict a future power output of the renewable energy sources based on the measurements, and
- an adjustment unit that is configured to adjust, based on the machine learning model, one or more hydrogen production parameters based on the predicted future power output.

Preferably, the system of the second aspect is configured to carry out the method of the first aspect or one of the implementations of the first aspect.

The system of the second aspect can be part of a hydrogen production system. The system can preferably be implemented on a processor.

In an implementation of the system of the second aspect, the one or more environmental sensors are IoT devices, and the prediction unit and the adjustment unit are located on a cloud server, wherein the IoT devices are configured to communicate with the cloud server over the Internet.

In a further implementation of the system of the second aspect, the IoT devices are configured to perform an encrypted authentication mechanism before transmitting measurement data to the cloud server.

In a further implementation of the system of the second aspect, the system further comprises an initial step of performing an end-to-end training with the measurements as input and an overall hydrogen production capability over an extended duration of time as output. End-to-end training herein refers to that a machine learning model is trained directly on the original input data as well as the intended target function.

In a further implementation of the system of the second aspect, the system is configured to obtain weather forecast data as well as electricity and hydrogen availability data from an external information provider, and wherein the machine learning model has been trained using the weather forecast data in relation to the measurements from the environmental sensors. This has the advantage that the machine learning model can use the weather forecast information for making accurate predictions of the expected hydrogen production capability several days into the future. Also, it can learn how certain weather predictions affect the renewable energy sources and the resulting hydrogen production capability.

In a further implementation of the system of the second aspect, the machine learning model is configured to recognise technically relevant relationships and patterns in significantly large data sets from IoT measurements and external sources in the sense of unsupervised learning, which then serve as a basis for algorithmic optimisation of the hydrogen production capability.

In a further implementation of the system of the second aspect, to achieve dimensionality reduction, production-irrelevant parameters are detected and labelled, and/or occurring production relevant relationships between hydrogen production parameters are detected based on association rule mining.

In a further implementation of the system of the second aspect, the machine learning model has been trained using methods of reinforcement learning, wherein in particular the adjustment unit comprises an RL agent that has been trained to adjust the one or more hydrogen parameters such that an objective function of the hydrogen production is optimized.

In a further implementation of the system of the second aspect, the system further comprises a web-based visualization platform for indicating a predicted future power output over a plurality of future time points, wherein preferably the predicted future power output over the plurality of future time points is adjusted in real-time. Preferably, the web-based visualization platform comprises components for outputting visual diagrams of predicted future power output and/or hydrogen production capacity, e.g. indicated as a function of time, wherein the predicted time includes at least the coming three days, preferably at least the coming five days.

In a further implementation of the system of the second aspect, two-way, real-time communication between the IoT and environmental sensors and the cloud server is maintained permanently using wireless or comparable communication channels.

A further aspect of the invention refers to a computer-readable storage medium storing program code, the program code comprising instructions that when executed by a processor carry out the method of the first aspect or one of the implementations of the first aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a block diagram illustrating a system for production and distribution of hydrogen that can be used in combination with the present invention,
- FIG. 2: is a block diagram illustrating a system in accordance with an embodiment of the present invention,
- FIG. 3: illustrates an example of anomaly detection using an embodiment of the present invention,
- FIG. 4A: illustrates the temporal development of a sensor value,
- FIG. 4B: illustrates how a normal range of the changing sensor values can be determined in accordance with an embodiment of the present invention,
- FIG. 5: illustrates how machine learning can be used to determine a deteriorating machine health before a failure occurs, in accordance with a further embodiment of the present invention, and
- FIG. 6: is a schematic illustration of how weather data and predictions can be used to determine a future electrical power generation capacity, in accordance with a further embodiment of the present invention.

### DETAILED DESCRIPTION OF EMBODIMENTS

The foregoing descriptions are only implementation manners of the present invention, the scope of the present invention is not limited to this. Any variations or replacements can be easily made through person skilled in the art. Therefore, the protection scope of the present invention should be subject to the protection scope of the attached claims.

A green hydrogen economy relies on hydrogen production from renewable energy sources. Whereas the demand for energy is relatively constant over longer time (except for fluctuations over the course of a day), the availability of renewable energy sources such as wind, solar power or hydropower varies hugely depending on environmental conditions. One day may be relatively windless and cloudy, whereas the following day may be sunny and windy. Hydrogen has a high energy density of approximately 120 MJ/kg, almost three times that of diesel or gasoline. Thus, hydrogen is in principle in an ideal position to be used for storage and to balance the varying availability of renewable energy sources.

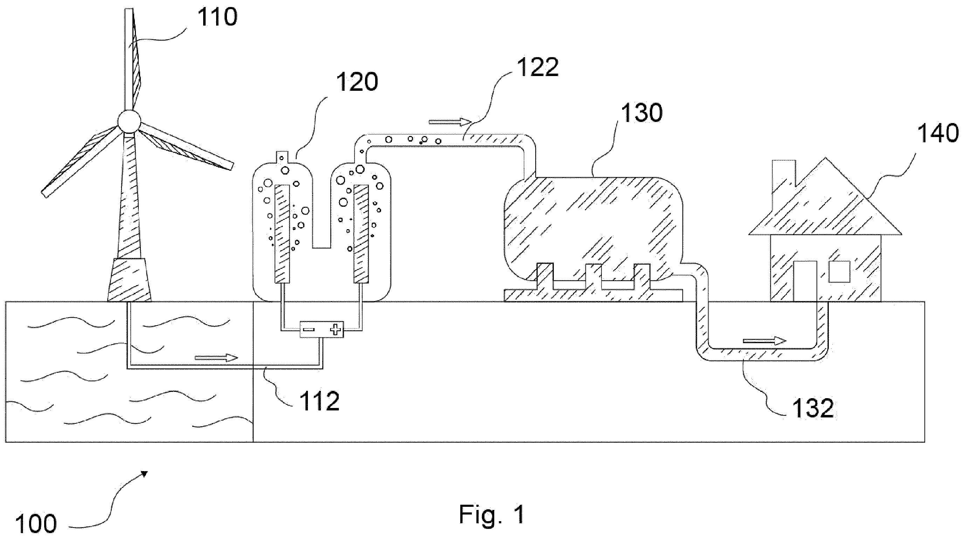

FIG. 1 is a block diagram illustrating a system 100 for production and distribution of hydrogen that can be used in combination with the present invention. The system 100 comprises a renewable energy source 110, here a wind turbine that is located offshore. An electric cable 112 distributes the electricity from the wind turbine 110 to an electrolysis unit 120. The electrolysis unit 120 uses the electricity to the generate hydrogen, which is fed through the distribution by 122 to a hydrogen storage unit 130. The hydrogen storage unit is connected to a distribution network 132 which distributes the produced hydrogen to consumers 140, where the hydrogen is used e.g. for heating. As is evident already from this schematic illustration, the consumer 140 relies on continuous supply with hydrogen, whereas the renewable energy source 110 depends on wind power, which fluctuates. In particular, the process of green hydrogen production and the different devices to be monitored and optimised to run a resilient energy system can be seen in FIG. 1.

Embodiments of the present invention provide a resilient cloud platform for green hydrogen energy and a method that uses artificial intelligence for hydrogen energy production. In particular, embodiments relate to the resilience of green hydrogen production with the support of data. These embodiments can be used in combination with the system shown in FIG. 1.

Furthermore embodiments relate to the increase of hydrogen energy production with data analytics and machine learning. Green hydrogen represents the fraction of hydrogen produced without releasing any emissions at all. The primary method of production is through electrolysis, a process that uses electricity to separate water into oxygen and hydrogen. The process further combines storage of hydrogen, delivery and usage of the green hydrogen.

It is known that the required data transfer today in green hydrogen production is not a common process. Cloud technologies functioning via the Internet with constant data flows do not exist or only partially exist but are not used to generate production details along the green hydrogen production process. This becomes a serious problem which prevents green hydrogen energy systems from performing resilient energy supply and matching the demand. Therefore, connecting the devices and their data along the process and the monitoring becomes an essential requirement to build new renewable energy systems with green hydrogen.

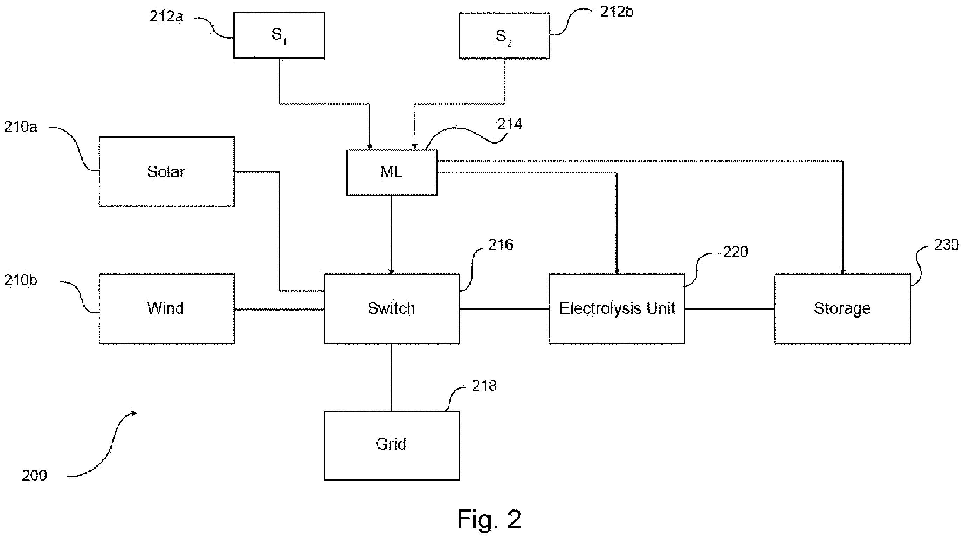

FIG. 2 is a schematic illustration of system 200 for resilient hydrogen production. The system 200 comprises renewable energy sources 210a, 210b and sensors 212a, 212b. The first sensor 212a may be correlated with the first renewable energy source, for example the first renewable energy source 210a may be a solar power device and the first sensor 212a maybe a light sensor. In a preferred embodiment, the first sensor 212a measures a current electric output of the renewable energy source 210a. In the same way the second renewable energy source 210b may be correlated with the second sensor 212b.

The system 200 of FIG. 2 further comprises a machine learning unit 214 that receives the data from the sensors 212a, 212b and controls a switch 216 based on the sensor data. The switch 216 receives electrical power from the renewable energy sources 210a, 210b and transmits power to the electrical power grid 218 or an electrolysis unit 220. The machine learning unit 214 is configured to send control signals to the switch 216, the electrolysis unit 220 and a hydrogen storage 230 that receives hydrogen produced by the electrolysis unit 220.

Parameters that can be controlled by the machine learning unit 214 include a percentage of electrical power that should be distributed to the grid 218 or the electrolysis unit 220, a hydrogen production rate of the electrolysis unit 220, a compression level of the storage 230, and one or more parameters related to the energy distribution, hydrogen production and/or hydrogen storage.

Preferably, the system 200 allows to connect all devices (e.g. Cell, Membrane, Wind park, Solar Cell, Solar Park, Solar Panel, Electrolyser, Storage, Pipelines) and their data to quickly obtain insights about the performance of individual power generating units in detail.

Preferably, this reduces the time to complete solar power and wind power generation unit analysis from one month to real-time. Understanding where assets are underperforming and quickly issuing maintenance requests to local technology teams leads to higher reliability of the overall system and directly contributes to improved production efficiencies. Furthermore, it provides visibility into the production process to compare supply and demand.

### Preferably, the system 200 of FIG. 2 comprises

- Device provisioning service supporting any type of device. Once set-up it can process data in real-time and therefore provides the most accurate output.
- Data Normalization for structuring the measurements stored in the database, preferably a relational database, in accordance with a series of so-called normal forms in order to reduce data redundancy and improve data integrity
- End-to-end machine learning operations to collaborate and increase the pace of model development and deployment via monitoring, validation, and governance of machine learning models.

The platform of the invention is an efficient green hydrogen platform in the cloud providing production performance and resilience for green hydrogen. Cloud computing is used for the delivery of computing services such as software, databases, servers and networking, over the internet. This means end users are able to access software and applications from wherever they are. In particular, maintenance workers can have direct access to the data and analysis results obtained with the system.

Cloud computing offers modern businesses advantages, including allowing multiple users to view data in real-time and collects, stores and shares project data.

Once the devices are connected, they are always on and send data. For example, IoT devices can be located both on the production as well as on the consumer side. Thus, changes in supply and demand can be detected within seconds and appropriate actions can be taken to make sure that supply and demand are balanced.

The device data is processed with data normalization and with further measure to prevent data redundancies. The data is in one place and secure due to the highest data security standards. This reduces data cycles from weeks or days to real-time. Analytics and machine learning are then able to operate and optimize the production process of green hydrogen across the distributed energy network. Teams, working to establish green energy networks, can then collaborate with each other with analytics and the support of claims and alerts.

The system 200 provides an improved green hydrogen production process.

In the following, a preferred platform shall be described in more detail.

Cloud computing is based on the premise that the main computing takes place on a machine, often remote, that is not the one currently being used. Data collected during this process is stored and processed by remote servers (also called cloud servers), which means the device accessing the cloud operates on a cloud infrastructure instead of the device hardware. These servers free up the memory and computing power of individual computers by hosting software, platforms, and data on their servers instead. Users can securely access cloud services using credentials received from the cloud computing provider. Because cloud computing entails that the workload of a user's computer is hosted on a different machine, the cloud can be accessible anywhere and is available to anyone with an Internet connection.

The platform helps to keep any data secure. The Security Development Lifecycle (SDL) introduces and emphasizes security and privacy early and throughout all phases of the platform development process. The platform is built on leading security technologies (used by governments to help organizations manage and control user identity and access), which are central elements in securing your environment. It delivers network and infrastructure security technologies and tools to help protect your applications and data. The platform offers advanced tools to detect and defend against threats.

The platform is also using the highest standards in data privacy. Privacy and data protection is grounded in a commitment to give organizations ownership of and control over the collection, use, and distribution of their data. That imposes carefully defined requirements for government and law enforcement requests for any data.

The platform uses a broad set of key global and industry-specific standards and supporting materials for key regulations, including, for example, ISO/IEC 27001 and ISO/IEC 27018, FedRAMP, and SOC 1, 2, and 3 Reports. It also meets regional and national standards that include the EU Model Clauses, EU-U.S. Privacy Shield, Singapore MTCS, and the CS Mark in Japan.

The platform can also avoid potential disasters and quick recovery of potentially lost data. It can provide high availability, possibilities for disaster recovery, and backups to provide a built-in backup and disaster recovery solution. The implemented system can be cost effective, simple, and scalable, and offers an industry-leading certification portfolio.

Security and Resilience are key areas of the platform and cover all levels of resilience: Resiliency is not about avoiding failures but responding to failures. The objective is to respond to failure in a way that avoids downtime and data loss. Business continuity and data protection are critical issues for today's organizations, and business continuity is built on the foundation of resilient systems, applications, and data. Reliability and resiliency are closely related. Reliability is defined as dependability and performing consistently well. Resiliency is defined as the capacity to recover quickly. Together, these two qualities are key to a trustworthy cloud service.

This also is relevant for the authentication of every device in the hydrogen energy production process for enhanced security. The set-up of individual identities and credentials for each of the connected devices helps to retain the confidentiality of both cloud-to-device and device-to-cloud messages. As well as selectively revoke access rights for specific devices as needed. The platform registers and provisions devices with zero touches, in a highly secure and scalable way. The device provisioning service supports any type of IoT device compatible with the platform.

It allows the creation and deployment of IoT Edge modules to transmit code and services between the cloud and the edge. The platform distributes intelligence - including AI and other advanced analytics - across a range of devices, all while reducing IoT application costs, easing development efforts, and running devices offline or with intermittent connectivity.

Device-to-cloud telemetry data is sent to understand the state of devices and define message routes to other platform services - without writing any code. In cloud-to-device messages, commands and notifications can be sent to connected devices - and track message delivery with acknowledgement receipts. It automatically resends device messages to accommodate intermittent connectivity.

As the devices and data are now connected there is more data available than humans can handle. The platform leverages the most modern data lake technology. A data lake is a highly scalable cloud service that allows developers, scientists, business professionals to gain insight from large, complex data sets. Data lake allows to store an unlimited amount of structured, semi-structured or unstructured data from a variety of sources. The data lake performs specific operational or transactional data transformation and analysis tasks. The data lake provides tools to query datasets and accommodates big data projects, which are compute intensive and often have distributed data sources.

The platform uses data normalization. This is the process of structuring a database, usually a relational database, in accordance with a series of so-called normal forms in order to reduce data redundancy and improve data integrity. Data normalization is generally considered the development of clean data. Data normalization is the organization of data to appear similar across all records and fields. It increases the cohesion of entry types leading to cleansing and higher quality data. Data normalization is important for Reporting and Machine Learning processes.

The platform also provides embedded analytics and interactive reporting. The platform can build visualizations optimized for desktop and mobile users. This becomes evident once users are not at their workplace. Users of the platform can easily make decisions from anywhere and on any device. The platform can also monitor performance of existing data and external data sources such as for example weather data.

The platform is using AI to improve the production efficiency of green hydrogen. It applies AI technology at the device level, at the system level, and cross-grid. This is essential for green hydrogen to achieve an economic breakthrough.

In certain embodiments, optimization can be performed through AI at the device level.

The preferred platform uses unsupervised learning in real-time. Algorithms that are used are Anomaly Detection by means of "Spikes & Dips" and "Level Shifts". In this context, clustering methods are used for a targeted approach. External influencing variables such as current weather data, such as wind or sun information data, are also used.

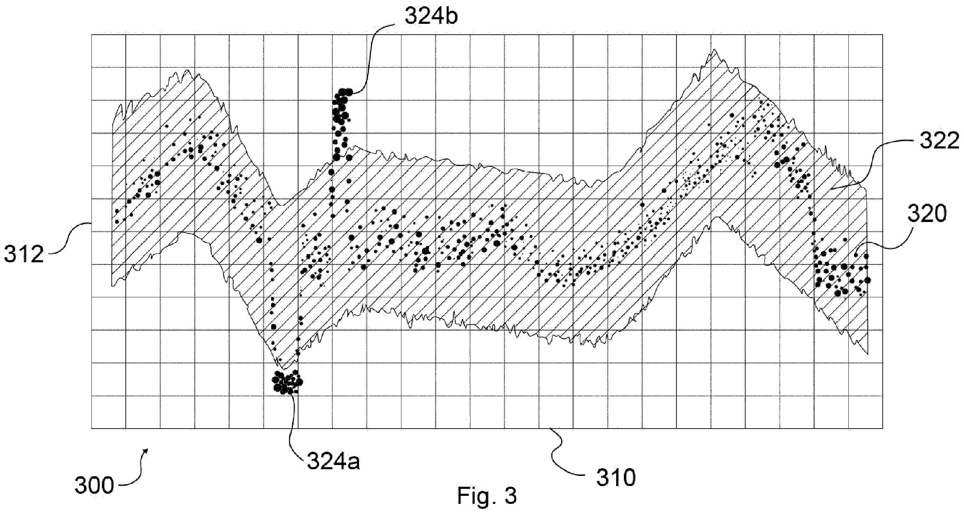

FIG. 3 shows an example of the anomaly detection using an embodiment of the present invention. FIG. 3 shows a hydrogen production rate (vertical axis 312) over time (horizontal axis 310). The points 320 indicate individual measurements of the production rate. The envelope 322 represents the range of expected measurement values. For example, this envelop can represent a predetermined percentage range of previous measurements at these times. For example, the envelope may represent that 95% of the previous measurements fall within the envelope 322. Once a predetermined number of subsequent measurements, e.g. at least three subsequent measurements, does not fall within the envelope, an alert may be generated. Preferably, an alert may be generated irrespective of whether more or less than the expected range of hydrogen is produced. This is because both events represent an anomaly that might warrant further analysis by an operator of the hydrogen production system.

In other embodiments, it may be specified that instead of a predetermined number of measurements, all measurements in a predetermined time span must be outside the expected range in order for an alert to be generated.

In other embodiments, the system uses different thresholds, which can be determined manually or statistically for each parameter. As soon as a threshold is exceeded or not reached, an alert is activated in the platform for the corresponding point in time. Likewise, a statistical threshold can be defined, which can preferably be determined by the Gaussian distribution.

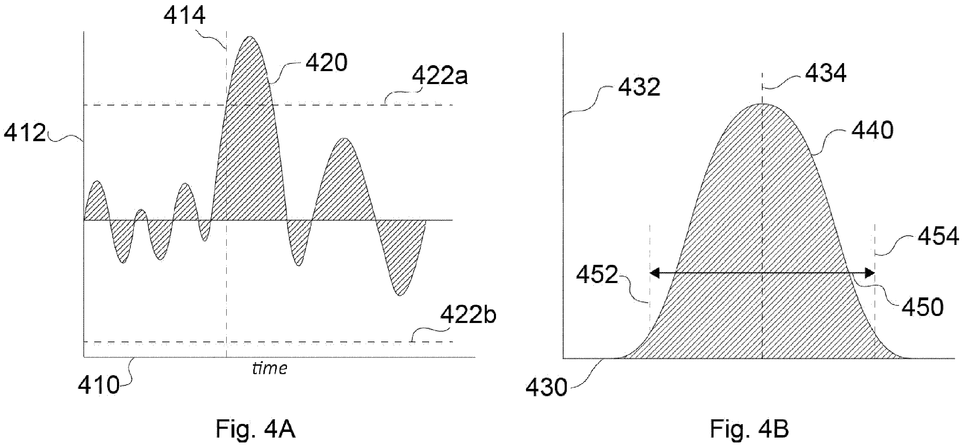

FIG. 4A illustrates the temporal development 420 of a sensor value (vertical axis 412) over time (horizontal axis 410). Specifically, it can be seen that the sensor value stays mostly within the predetermined upper threshold 422a and lower threshold 422b. Merely, at time point 414, the sensor value exceeds the upper threshold 422a and stays above the upper threshold for a certain time. The system can be configured to generate an alert immediately after the predetermined threshold is exceeded or after the threshold is exceeded for at least a predetermined duration. This embodiment provides an efficient way of determining anomalies in real-time and informing an operator within seconds.

The upper and lower thresholds 422a, 422b may be predetermined, e.g. based on an estimate by an experienced operator of what constitutes useful upper and lower thresholds. However, in practice there may be many parameters where it is not immediately clear what constitutes a normal operational ran. Therefore, it is desirable to provide an automatic way of determining upper and lower thresholds.

FIG. 4B illustrates a method for automatically determining a lower and lower and upper threshold for issuing alerts. The horizontal axis 430 shows the possible sensor values, with increasing values shown towards the right. The vertical axis 432 shows the frequency of these values. It can be seen that the values show a Gaussian distribution 440 around a medium value 434 Based on the Gaussian distribution 440, a confidence interval 450 with a lower boundary 452 and an upper boundary 454 can be defined. For example, the confidence interval 450 can be defined by comprising two standard deviations around the medium value 434.

The presented method provides an efficient and fully automatic way of determining normal operational ranges for all relevant parameter values. Furthermore, the method can continuously adapt to slowly changing environmental conditions. For example, by rerunning the automatic determination of the confidence interval and corresponding lower and upper boundaries in predetermined intervals, for example predetermined intervals that are longer than a day but less than a year, the alert thresholds can be periodically updated to reflect naturally changing environmental conditions. For example, by updating the thresholds in intervals that are shorter than two months, preferably shorter than one month, the system can adapt to changing sensor values due to normal seasonal changes. Thus, for example, if a light sensor suddenly generates very high readings in winter, this might trigger an alert, whereas the same high value of the light sensor in the summer might not generate an alert.

At a system level, algorithms from the field of Reinforcement Learning are being used for optimization.

To use Reinforcement Learning in the platform, preferably, exact knowledge about the system is provided to the system. Once this is given, the intelligent platform can handle a large set of options to maximize economic outcome with optimal usage of given resources (e.g. buy/sell electricity, production of H2 in electrolysis, transportation and storage options).

These methods are used for the similarity mode, e.g., if many electrolysers from different manufacturers are available, an optimized operation is suggested. Weaknesses of individual devices can also be detected across the board using this technique. Instead of replacing devices periodically or waiting for the device to ultimately fail, similarity patterns in H₂ production can be detected to optimally prevent technical plants from failure. This guarantees lower maintenance costs and an increase in profitability.

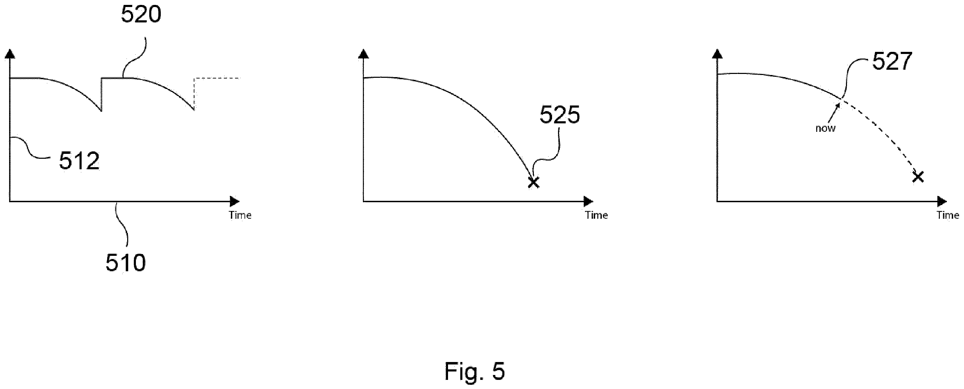

FIG. 5 illustrates how a system in accordance with the present invention can detect a failure before it occurs. The left diagram in FIG. 5 shows a plot of a measure of a machine health (vertical axis 512) plotted over time (horizontal axis 510). Different sensor values may be suitable for determining the measure of the machine health. Usually, the machine health deteriorates over time, but due to regular maintenance it is ensured that the machine health never deteriorates to the point of machine failure. This is evident by the curve 520, which corresponds to a normal maintenance cycle.

The middle diagram of FIG. 5 illustrates what happens maintenance is not performed in time. The machine health deteriorates to the point of machine failure at 525.

Due to real-time monitoring of relevant variables and computation of the measure of machine health, a maintenance point 527 can be determined, where maintenance needs to be performed. The machine learning system can be considered to generate an alert to notify maintenance personnel to perform the machine maintenance. The alert can comprise a message and/or an audio output.

The platform also enables cross-grid optimization and real-time integration of external factors both in the present and as a forecast. These forecasts can be taken from external sources (e.g. weather forecast) or made based on historical data.

In particular, local wind forecast can be used as a forecast for wind power generation from one or more wind turbines. If a wind forecast is not available for the location of a wind turbine, interpolation can be used to estimate the wind strength at the location of the wind turbine.

If there is no wind in a grid with wind-electrolyser coupling, the operation of the system is hindered. This can be optimized by including the surrounding ecosystem. For example, if there is local wind calm, there may well be better wind conditions across the region, or solar energy may be used if this is more suitable.

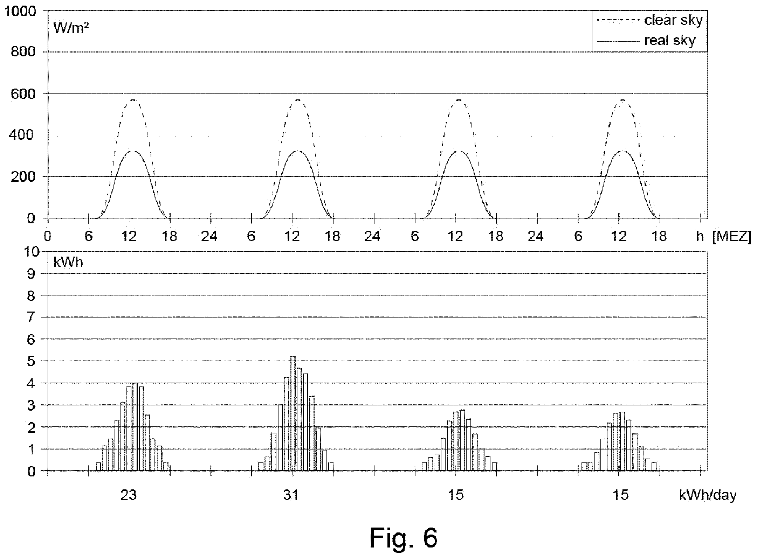

FIG. 6 illustrates how weather forecasts of the actual radiation (in W/m²), shown in the top diagram affects the electricity (in kWh), shown in the bottom diagram, generated by a specific small solar power plant. Through monitoring of sensor data, forecast data and measured electricity generation, the system can learn to predict the electricity generation several days into the future.

In order to perform the economic optimization of cross-grids, it is important to consider external factors such as wind-solar mix and electricity price (which is also fundamentally influenced by other factors such as current consumption). The existing data of the grid (e.g. storage level and H2 production details) on the platform delivers production-relevant parameters such as set-up costs and set-up time, which are relevant for operators of green energy production plants. For this, a "data preparation" is carried out first, because the data obtained from sensor devices has to be put in the right context and possibly can be corrupted. Once grid-level sets of data are running, these are linked to forecasts (of e.g. consumption behaviour and weather conditions) which can be automatically inserted via data interfaces to the platform, e.g. live data of European Energy Exchange (EEX) can be gathered in real-time.

In particular, price developments on the electricity market can be used as an external factor that also influences hydrogen production parameters. For example, if a spot market price for electricity is higher than a certain threshold, it can be decided that the generated electricity should be made available directly to the public power grid. Otherwise, the electricity is used for generation of hydrogen. The RL agent can be trained such that an economic output (in terms of value of the produced electricity for the grid and hydrogen for the hydrogen storage) is maximized. The RL agent can thereby learn to make smarter decisions than only a threshold comparison. For example, the RL agent can learn that spot market prices for electricity are higher in the evening. Thus, it may be beneficial to use the electricity generated by the renewable energy sources for hydrogen production during the day and in the evening for feeding into the grid. Herein, the RL agent can consider further considerations such as the fill level of the hydrogen tank, an expected hydrogen consumption, a hydrogen price, a potential slow loss of unconsumed hydrogen from the storage, and so on.

By using all three of these options from device to cross-grid level, maximum economic efficiency of green energy production systems is achieved. Without this, it is only possible with traditional resilience planning based on known points such as redundancy, isolation, loose coupling and fallback. All of these are cost-intensive and thus business-minimizing factors that stand in the way of green hydrogen breakthrough. The platform supports the economic viability of hydrogen through digitalization, handling high-dimensional data in green energy production and empowering operators of such plants to make optimal data-driven business decisions.

It will be understood by a person skilled in the art that, for a purpose of convenient and brief description, division of the foregoing function modules is used as an example for illustration. In actual application, the foregoing functions can be allocated to different function modules and implemented according to a requirement, that is, an inner structure of an apparatus is divided into different function modules to implement all or some of the functions described above.

In several embodiments provided in this application, it should be understood that the disclosed system, apparatus, and method may be implemented in other manners. For example, the described apparatus embodiment is only an example. For example, multiple units or components may be combined or integrated into another system, or some features may be ignored or not performed. In addition, communication connections may be implemented by using some interfaces. The indirect couplings or communication connections between the apparatuses or units may be implemented in electronic, mechanical, or other forms.

Units described as separate components may or may not be physically separate, and components displayed as units may or may not be physical units, may be located in one position, or may be distributed on multiple network units. Some or all of the units may be selected according to actual requirements to achieve the objectives of the solutions of the embodiments.

The foregoing descriptions are only specific implementations of the present invention, but are not intended to limit the protection scope of the present invention. Therefore, the protection scope of the present invention shall be subject to the protection scope of the claims.

## Claims

1. A method for supporting resilient hydrogen production from one or more renewable energy sources (210a, 210b), the method comprising:
- obtaining, at a plurality of time points, measurements from environmental sensors that indicate a current environmental condition of the renewable energy sources (210a, 210b),
- predicting, using a machine learning model, a future power output of the renewable energy sources (210a, 210b) based on the measurements, and
- adjusting, based on the machine learning model, one or more hydrogen production parameters based on the predicted future power output.

2. The method of claim 1, wherein environmental data and/or IoT measurements serve as a database for training the machine learning model.

3. The method of claim 2, wherein the machine learning model uses unsupervised learning, in particular dimensionality reduction, to recognise production-relevant relationships in the database.

4. The method of one of the previous claims, wherein the machine learning model comprises a reinforcement learning, RL, agent that is configured to adjust the one or more hydrogen production parameters with a framework of production-relevant relationships.

5. The method of claim 4, wherein the RL agent is configured to control one or more of a hydrogen production plan, a feed-in of the produced hydrogen, one or more parameters of storage or transport of the hydrogen, and a coupling with a by-product of the hydrogen production, in particular produced waste heat,
wherein preferably the machine learning model is configured to increase a resilience of hydrogen production by optimizing a measure of overall hydrogen production.

6. The method of one of the previous claims, further comprising detecting a trend and/or an anomaly in time series of the IoT measurements and environmental data, preferably wherein trend and/or anomaly, wherein preferably the alert is output when the trend and/or anomaly exceeds a predefined threshold, further preferably wherein an output alert is automatically passed to a collaboration systems that enables internet-based communication and distribution of roles and tasks.

7. The method of one of the previous claims, wherein the renewable energy sources (210a, 210b) comprise one or more of hydropower, wind turbines, solar cells, bioenergy and geothermal energy, and the environmental sensors comprise an anemometer, a light sensor and/or a power meter that measures a current output power of the renewable energy sources (210a, 210b).

8. The method of one of the previous claims, further comprising a cloud-based data storage for centrally storing the measurements, wherein preferably the method comprises an additional step of normalizing the measurements, preferably wherein two-way, real-time communication between the IoT and environmental sensors and the cloud server is maintained permanently using wireless or comparable communication channels.

9. A system (100, 200, 220) for supporting resilient hydrogen production from one or more renewable energy sources (210a, 210b), the system (100, 200, 220) comprising:
- one or more environmental sensors that are configured to generate measurements that indicate a current environmental condition of the renewable energy sources (210a, 210b),
- a prediction unit that is configured to, using a machine learning model, predict a future power output of the renewable energy sources (210a, 210b) based on the measurements, and
- an adjustment unit that is configured to adjust, based on the machine learning model, one or more hydrogen production parameters based on the predicted future power output.

10. The system (100, 200, 220) of claim 9, wherein the one or more environmental sensors are IoT devices, and the prediction unit and the adjustment unit are located on a cloud server, wherein the IoT devices are configured to communicate with the cloud server over the Internet wherein preferably the IoT devices are configured to perform an encrypted authentication mechanism before transmitting measurement data to the cloud server.

11. The system (100, 200, 220) of claim 9 or 10, further comprising an initial step of performing an end-to-end training with the measurements as input and an overall hydrogen production capability over an extended duration of time as output.

12. The system (100, 200, 220) of one of claims 9 to 11, wherein the system (100, 200, 220) is configured to obtaining weather forecast data as well as electricity and hydrogen availability data from an external information provider, and wherein the machine learning model has been trained using the weather forecast data in relation to the measurements from the environmental sensors.

13. The system (100, 200, 220) of one of claims 9 to 12, wherein the machine learning model recognises technically and business relevant relationships and patterns in significantly large data sets from IoT measurements and external sources in the sense of unsupervised learning, which then serve as a basis for algorithmic optimisation of the hydrogen production capability, wherein preferably to achieve dimensionality reduction, production-irrelevant parameters are detected and labelled, and/or occurring production relevant relationships between hydrogen production parameters are detected based on association rule mining.

14. The system (100, 200, 220) of one of claims 9 to 13, wherein the machine learning model has been trained using methods of reinforcement learning, wherein in particular the adjustment unit comprises an RL agent that has been trained to adjust the one or more hydrogen parameters such that an objective function of the hydrogen production is optimized, and/or wherein the system further comprising a web-based visualization platform for indicating a predicted future power output over a plurality of future time points, wherein preferably the predicted future power output over the plurality of future time points is adjusted in real-time.

15. A computer-readable storage medium storing program code, the program code comprising instructions that when executed by a processor carry out the method of one of claims 1 to 8.
